# EUROPEAN PATENT SPECIFICATION

(11) **EP 4 087 306 B1**
(45) Date of publication and mention of the grant of the patent: **15.11.2023**
(21) Application number: 21172367.1
(22) Date of filing: 06.05.2021
(51) Int. Cl.: H04W 24/06, H04W 16/22, H04L 43/50, H04W 16/18

(54) **CONCURRENT VEHICLE-TO-EVERYTHING (V2X) FIELD TESTING**
GLEICHZEITIGE FAHRZEUG-ZU-ALLEM(V2X)-FELDPRÜFUNG
ESSAIS DE TERRAIN SIMULTANÉS DE VÉHICULE À TOUT (V2X)

(43) Date of publication of application: 09.11.2022
(73) Proprietor: Rohde & Schwarz GmbH & Co. KG, 81671 München (DE)
(72) Inventor: Naseef, Mahmud, 82152 Planegg (DE)
(74) Representative: Rupp, Christian

(56) References cited:
- CN-A- 111 625 939
- KR-A- 20190 072 437
- KR-A- 20200 058 194
- Fischer Francois ET AL: "D4.1: V2X development and test plan", , 15 April 2019 (2019-04-15), pages 1-25, XP055782067, Retrieved from the Internet: URL:https://5gaa.org/wp-content/uploads/20 18/11/5GAA_P-190033_V2X-Functional-and-Per formance-Test-Report_final-1.pdf [retrieved on 2021-03-04]
- GOZALVEZ J ET AL: "IEEE 802.11p vehicle to infrastructure communications in urban environments", IEEE COMMUNICATIONS MAGAZINE, IEEE SERVICE CENTER, PISCATAWAY, US, vol. 50, no. 5, 1 May 2012 (2012-05-01), pages 176-183, XP011443268, ISSN: 0163-6804, DOI: 10.1109/MCOM.2012.6194400
- Association 5g Automotive: "V2X Technology Functional and Performance Benchmark Testing Key Findings", , 1 October 2018 (2018-10-01), pages 1-23, XP055849885, Retrieved from the Internet: URL:https://5gaa.org/wp-content/uploads/20 18/10/FCC-USDOT-CV2X-v2.14_wo_Video-c1_Fin al.pdf [retrieved on 2021-10-11]

## Description

### Technical Field

The present disclosure generally relates to field testing of V2X-based device-to-device communication, and in particular to a test system for V2X field testing of one or more vehicles under test, and a corresponding test method.

### Background Art

Modern cars are increasingly equipped with wireless communication devices, in particular for vehicle-to-everything (V2X) communication, on which basis information may be communicated from a vehicle to any entity that may affect the vehicle or that may be affected by it. Such a vehicular communication system may incorporate other more specific types of communication such as V2N (vehicle-to-network) based on cellular communications, V2V (vehicle-to-vehicle), V2I (vehicle-to-infrastructure) and V2P (vehicle-to-pedestrian) based on device-to-device communications. V2X technology may not only improve traffic flow but may also help to make traffic safer.

At an advanced development stage, automotive manufacturers and entrusted testing labs are required to field test a V2X communication of V2X-enabled vehicles. Such field testing usually relates to a particular test scenario, such as emergency braking, fast lane change, or traffic crossing, and is carried out on so-called testing grounds (or proving grounds), which may be fairly extensive estates. For example, a track length may extend up to 20 km. This allows for field testing of multiple vehicles in parallel, but exclusive use rights are very rarely granted. This may require setting up and dismantling on-site test equipment within short time windows and for each required test scenario in sequence, which is time-consuming and expensive.

Fischer et al., "5G-DRIVE: 5G HarmoniseD Research and Trials for service Evolution between EU and China. D4.1: V2X development and test plan", KR 2020/0058194 A and Gozalvez et al., "IEEE 802.11p vehicle to infrastructure communications in urban environments", IEEE Comm. Mag., vol. 50, no. 5, p. 176-183 respectively disclose a test system for V2X field testing of one or more vehicles under test according to the preamble of the independent claims.

### Summary

Thus there is a need to improve a field testing of V2X-enabled vehicles in terms of amount of work, time and cost. To this end, the present disclosure provides a test system for V2X field testing of one or more vehicles under test and a corresponding test method.

The invention is defined by the appended independent claims. Preferred embodiments are set forth in the dependent claims.

### Advantageous Effects

The present disclosure provides a test system and method which allow for field testing of
- a plurality of vehicles
- in parallel at different locations of the testing ground, and
- according to different test profiles (i.e., sets of test scenarios) that are relevant for them based on their configuration.

This may reduce time, effort as well as cost associated with field testing of V2X-enabled vehicles. Field stations may easily be added to the test system through LAN communication, so that a number of field stations can be scaled up or down depending on the testing ground and number of vehicles being tested.

The field testing may even be carried out on a plurality of estates that are distanced from one another, thus leveraging economies-of-scale.

The field testing at the different locations of the testing ground may even be triggered by the vehicles driving around the testing ground. As such, field testing may be simplified even more in that no routes need to be predefined in accordance with the different test profiles.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates schematically a test system 1 in accordance with the present disclosure;
- FIG. 2: illustrates an exemplary arrangement of the test system 1 of FIG. 1 on an exemplary testing ground 2;
- FIG. 3: illustrates an implementation of the test system 1 of FIG. 1 in accordance with the present disclosure; and
- FIG. 4: illustrates a method 4 in accordance with the present disclosure;

### Detailed Descriptions of Drawings

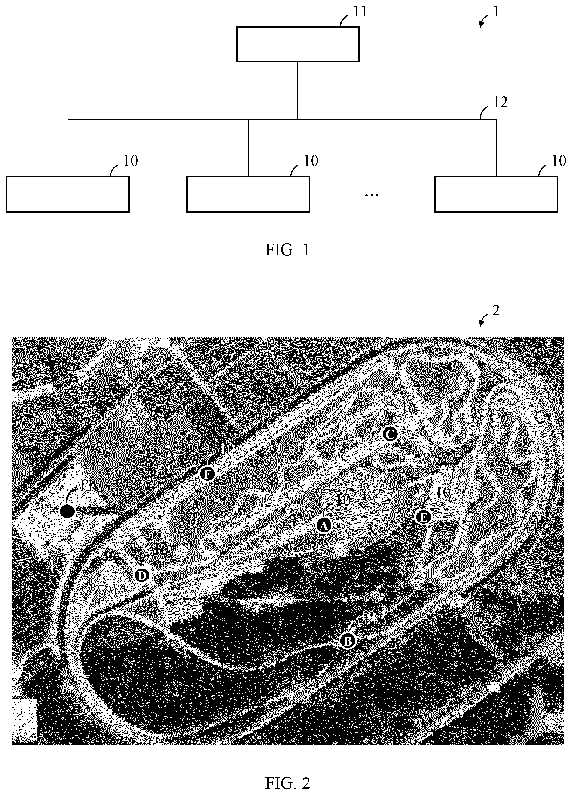

FIG. 1 illustrates schematically a test system 1 in accordance with the present disclosure, and FIG. 2 illustrates an exemplary arrangement of the test system 1 of FIG. 1 on an exemplary testing ground 2.

The test system 1 in question is for Vehicle-to-Everything, V2X, field testing of one or more vehicles under test 106.

Field testing as used herein may refer to testing in a real-world environment, yet under controlled conditions.

A vehicle as used herein may refer to an object that is configured to transport people and/or cargo on roads.

According to FIG. 1, the test system 1 comprises a plurality of field stations 10 and a central controller 11. The central controller 11 is in communication with the plurality of field stations 10 via a LAN 12. In particular, the central controller 11 may be in Local Area Network, LAN, communication with the plurality of field stations 10.

According to FIG. 2, the plurality of field stations 10 is arranged at different locations A-F of a testing ground 2. The central controller 11 may be arranged at or off the testing ground 2.

The testing ground 2 of FIG. 2 comprises a single estate, whereas the testing ground 2 may generally comprise a plurality of estates that are distanced from one another.

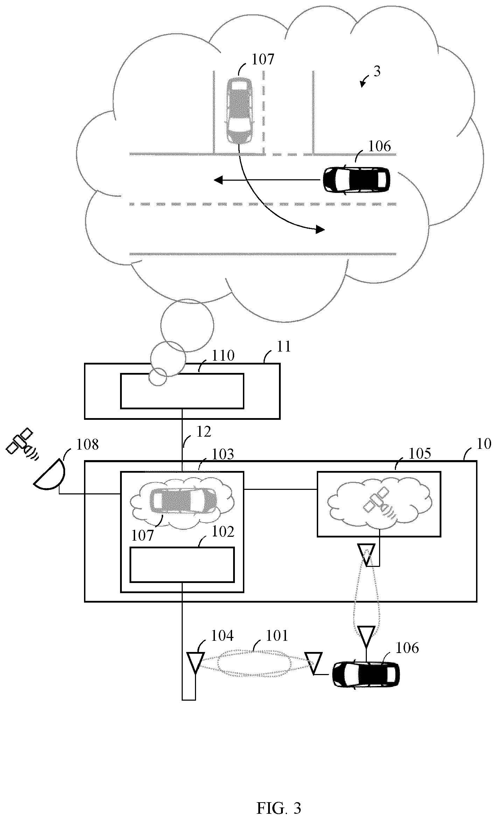

FIG. 3 illustrates an implementation of the test system 1 of FIG. 1 in accordance with the present disclosure.

For reasons of clarity, FIG. 3 depicts only one of the plurality of field stations 10, and a central controller 11. Again, the central controller 11 is in communication with the field station 10.

The central controller 11 may be operable to maintain a test profile for each of the one or more vehicles under test 106. In accordance with FIG. 3, the respective test profile may be provided by a V2X simulation platform 110 of the central controller 11. As will be appreciated, the V2X simulation platform 110 may alternatively be hosted by a server of an external computing cloud (not shown) and may be in Wide Area Network, WAN, communication with the central controller 11.

The V2X simulation platform 110 may be configured to manage the entire test activity, such as test cases management, test result analysis, etc., and to generate test scenarios 3 as already mentioned. A scenario may include the one or more vehicles under test 106, i.e., so-called host vehicles, and may further include one or more remote vehicles used to assist the host vehicle(s) to trigger test scenarios 3. The V2X simulation platform 110 may be configured to simulate the respective test scenario 3, i.e., generate dynamic simulation data of the vehicles involved, such as vehicle speed, position, distance between vehicles, obstacles, traffic scenes, and generate Intelligent Transport Systems, ITS, communications messages, and to send the simulation data to the respective field station 10 (remote vehicle(s)) and the one or more vehicles under test 106 (host vehicle(s)).

An Intelligent Transport System as used herein may refer to a system in which information and communication technologies are applied in the field of road transport, including infrastructure, vehicles and users, and in traffic management and mobility management, as well as for interfaces with other modes of transport.

Each of the test profiles may comprise a plurality of test scenarios 3. The test scenarios 3 may be defined by appropriate V2X standards. For example, the respective test scenario 3 may comprise one of: emergency braking, fast lane change, and traffic crossing. In other words, the respective test scenario 3 stands for a potentially hazardous situation concerning the one or more vehicles under test 106.

Each of the plurality of test scenarios 3 of a test profile may be associated with a particular one of the plurality of field stations 10. As a fictional example, the test scenarios 3 of emergency braking, fast lane change, and traffic crossing may respectively be associated with the field stations 10 arranged at the locations A, B and C of the testing ground 2. In other words, field testing in accordance with a test profile comprising the test scenarios 3 of emergency braking, fast lane change, and traffic crossing requires visiting the locations A, B and C of the testing ground 2.

The plurality of field stations 10 may be time-synchronized. To this end, the respective field station 10 may comprise a GNSS receiver 108 for time synchronization among the plurality of field stations 10.

In accordance with FIG. 3, the respective field station 10 may comprise a radio communication test device 103 and an antenna 104 connected to the radio communication test device 103. The antenna 104 may comprise an omnidirectional or a directional antenna. In between the radio communication test device 103 and the antenna 104, an RF amplifier (not shown) may be deployed for boosting a transmit power. The radio communication test device 103 may be operable to emulate physical, PHY, and medium access, MAC, layers of the V2X protocol stack 102, and to exchange V2X messages, such as Basic Safety Messages, BSM, with the one or more vehicles under test 106.

The respective field station 10 is thus operable to implement a device-to-device, D2D, communication interface 101 of a V2X protocol stack 102. The D2D communication interface 101 may comprise one of: a PC5 interface, and a Dedicated Short-Range Communications, DSRC, interface.

PC5 as used herein may refer to a D2D communications interface ("sidelink", unlike "uplink"/"downlink") based on 3GPP standards defining LTE for V2X (LTE-V2X).

DSRC as used herein may refer to a D2D communications interface based on IEEE and SAE standards and providing a functionality similar to PC5.

The respective field station 10 comprises a vector signal generator 105 operable to simulate an environment of a GNSS receiver of the one or more vehicles under test 106. That is to say, the vector signal generator 105 generates a GNSS signal in accordance with given satellite constellations, signal characteristics, atmospherics etc. that causes the GNSS receiver of the one or more vehicles under test 106 to actually navigate according to the parameters of the respective test scenario 3. In FIG. 3, this is suggested by the satellite symbol arranged within a cloud shape.

A global navigation satellite system, GNSS, as used herein may refer to a system that uses satellites to provide autonomous geo-spatial positioning as well as time synchronization with global coverage. Examples include GPS, GLONASS, BeiDou and Galileo.

The respective field station 10 is further operable to execute one or more test scenarios 3 concerning the one or more vehicles under test 106. The one or more test scenarios 3 may comprise an interaction of the one or more vehicles under test 106 and one or more further D2D communication peers 107, such as remote vehicles. In FIG. 3, this is suggested by a traffic crossing scenario 3 arranged within a cloud shape. In other words, the radio communication test device 103 of the respective field station 10 may simulate a behavior of one or more remote vehicles 107 according to the respective test scenario 3. In FIG. 3, this is suggested by the grey vehicle symbol arranged within a cloud shape. For example, such behavior may comprise generating V2X messages as a stimulus for the one or more vehicles under test 106, or generating V2X messages in response to such a stimulus by the one or more vehicles under test 106.

The respective field station 10 is further operable to capture a test result of the one or more test scenarios 3. The test result may comprise one or more of: a timestamp, a transmit signal configuration, environmental conditions, and camera feed data. In particular, the timestamp defines for a respective V2X message when it was sent to or received from the respective one of the plurality of vehicles under test 106.

Concurrently to the one or more vehicles under test 106 driving around the testing ground 2, the following may apply:
The central controller 11 may be operable to configure the particular one of the plurality of field stations 10 for the associated test scenario 3 of the test profile of the one or more vehicles under test 106.

The configuring may be controlled by a particular sequence of the test scenarios 3 of the test profile for the respective vehicle under test 106 in accordance with a particular predefined route of the respective vehicle under test 106 on the testing ground 2. In the previous example, the one or more vehicles under test 106 may visit the locations A, B and C of the testing ground 2 in this particular sequence in accordance with the predefined route.

Alternatively, the configuring may be triggered by an approach of the respective vehicle under test 106 to the particular one of the plurality of field stations 10 in accordance with an arbitrary route of the respective vehicle under test 106 on the testing ground 2. In the previous example, the one or more vehicles under test 106 may visit the locations A, B and C of the testing ground 2 in an arbitrary sequence, and the configuring may be carried out on-demand (i.e., triggered by an approach of the respective vehicle under test 106).

Then, the particular one of the plurality of field stations 10 is operable to execute the associated test scenario 3 at the respective field station 10. In the previous example, the test scenarios 3 of emergency braking, fast lane change, and traffic crossing may be executed when visiting the locations A, B and C of the testing ground 2, either according to the particular sequence / predefined route or on demand.

The particular one of the plurality of field stations 10 is further operable to capture the test result of the associated test scenario 3 at the respective field station 10. The test result may comprise one or more of: a timestamp, a transmit signal configuration, environmental conditions, and camera feed data.

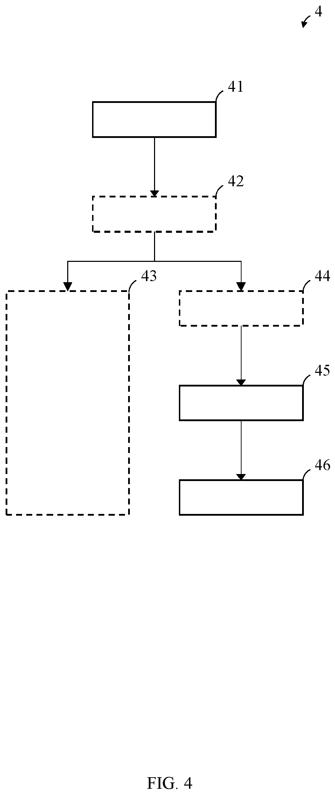

FIG. 4 illustrates a method 4 in accordance with the present disclosure.

The method 4 is for Vehicle-to-Everything, V2X, field testing of one or more vehicles under test 106, and may be performed by any one of the test systems 1 specified above.

The method 4 comprises arranging 41, executing 45 and capturing 46 steps, and may further comprise maintaining 42, driving 43 and configuring 44 steps. The configuring 44, executing 45 and capturing 46 steps may be performed concurrently to the driving 43 step.

More specifically, the method 4 comprises arranging 41 a plurality of field stations 10 at different locations A-F of a testing ground 2 and a central controller 11 in communication with the plurality of field stations 10. The respective field station 10 is operable to implement a device-to-device, D2D, communication interface 101 of a V2X protocol stack 102.

The method 4 may further comprise maintaining 42 a test profile for each of the one or more vehicles under test 106. Each of the test profiles comprises a plurality of test scenarios 3, and each of the plurality of test scenarios 3 is associated with a particular one of the plurality of field stations 10.

The configuring 44 may be controlled by a particular sequence of the test scenarios 3 of the test profile for the respective vehicle under test 106 in accordance with a particular predefined route of the respective vehicle under test 106 on the testing ground 2.

Alternatively, the configuring 44 may be triggered by an approach of the respective vehicle under test 106 to the particular one of the plurality of field stations 10 in accordance with an arbitrary route of the respective vehicle under test 106 on the testing ground 2.

The method 4 may further comprise driving 43 the one or more vehicles under test 106 around the testing ground 2.

Concurrently to the driving 43, the method 4 may further comprise configuring 44 the particular one of the plurality of field stations 10 for the associated test scenario 3 of the test profile of the one or more vehicles under test 106, and further comprises executing 45 the associated test scenario 3 at the respective field station 10 and capturing 46 the test result of the associated test scenario 3 at the respective field station 10.

The test result may comprise one or more of: a timestamp, a transmit signal configuration, environmental conditions, and camera feed data.

Advantageously, the technical effects and advantages described above in relation with the test system 1 equally apply to the method 4 having corresponding features.

## Claims

1. A test system (1) for Vehicle-to-Everything, V2X, field testing of one or more vehicles under test (106), comprising
- a plurality of field stations (10) arranged at different locations (A-F) of a testing ground (2), the respective field station (10) operable
- to implement a device-to-device, D2D, communication interface (101) of a V2X protocol stack (102),
- to execute one or more test scenarios (3) concerning the one or more vehicles under test (106), and
- to capture a test result of the one or more test scenarios (3);
- a central controller (11) in communication with the plurality of field stations (10) via a local area network, LAN;
**characterized by** the respective field station (10) comprising a vector signal generator (105) that generates a GNSS signal, operable to simulate an environment of a GNSS receiver of the one or more vehicles under test (106).

2. The test system (1) of claim 1,
- the test result comprising one or more of: a timestamp, a transmit signal configuration, environmental conditions, and camera feed data.

3. The test system (1) of claim 1 or claim 2,
- the respective field station (10) comprising
- a radio communication test device (103) operable
- to emulate physical, PHY, and medium access, MAC, layers of the V2X protocol stack (102), and
- to exchange V2X messages with the one or more vehicles under test (106); and
- an antenna (104) connected to the radio communication test device (103).

4. The test system (1) of any one of the preceding claims,
- the respective field station (10) comprising a GNSS receiver (108) for time-synchronization among the plurality of field stations (10).

5. The test system (1) of any one of the preceding claims,
- the one or more test scenarios (3) comprising an interaction of the one or more vehicles under test (106) and one or more further D2D communication peers (107).

6. The test system (1) of any one of the preceding claims,
- the central controller (11) operable
- to maintain a test profile for each of the one or more vehicles under test (106),
- each of the test profiles comprising a plurality of test scenarios (3),
- each of the plurality of test scenarios (3) associated with a particular one of the plurality of field stations (10); and
- concurrently to the one or more vehicles under test (106) driving around the testing ground (2), to configure the particular one of the plurality of field stations (10) for the associated test scenario (3) of the test profile of the one or more vehicles under test (106).

7. The test system (1) of claim 6,
- the configuring controlled by a particular sequence of the test scenarios (3) of the test profile for the respective vehicle under test (106) in accordance with a particular predefined route of the respective vehicle under test (106) on the testing ground (2).

8. The test system (1) of claim 6,
- the configuring triggered by an approach of the respective vehicle under test (106) to the particular one of the plurality of field stations (10) in accordance with an arbitrary route of the respective vehicle under test (106) on the testing ground (2).

9. The test system (1) of any one of the preceding claims,
- the respective test scenario (3) comprising one of: emergency braking, fast lane change, traffic crossing, and green wave/lights.

10. The test system (1) of any one of the preceding claims,
- the respective test profiles provided by a V2X simulation platform (110).

11. The test system (1) of any one of the preceding claims,
- the D2D communication interface (101) comprising one of: a PC5 interface, and a Dedicated Short-Range Communications, DSRC, interface.

12. The test system (1) of any one of the preceding claims,
- the testing ground (2) comprising a plurality of estates that are distanced from one another.

13. A method (4) for Vehicle-to-Everything, V2X, field testing of one or more vehicles under test (106), the method being performed by a test system (1) comprising
a plurality (41) of field stations (10) arranged at different locations (A-F) of a testing ground (2) and a central controller (11) in communication with the plurality of field stations (10) via a local area network, LAN, the respective field station (10) implementing a device-to-device, D2D, communication interface (101) of a V2X protocol stack (102); and the method (4) comprising
- executing (45) one or more test scenarios (3) concerning the one or more vehicles under test (106) at the respective field station (10), and
- capturing (46) a test result of the one or more test scenarios (3) at the respective field station (10);
**characterized by**
- simulating an environment of a GNSS receiver of the one or more vehicles under test (106) by using a vector signal generator (105) at the respective field station (10), the vector signal generator (105) generating a GNSS signal.

14. The method (4) of claim 13,
- being performed by the test system (1) according to any one of the claims 2 to 12.

## Patentansprüche

1. Testsystem (1) für einen Vehicle-to-Everything-Feldtest, V2X-Feldtest, eines oder mehrerer zu testender Fahrzeuge (106), umfassend
- eine Vielzahl von Feldstationen (10), die an unterschiedlichen Positionen (A-F) eines Testgeländes (2) angeordnet sind, wobei die jeweilige Feldstation (10) betriebsfähig ist,
- um eine Vorrichtung-zu-Vorrichtung-Kommunikationsschnittstelle, D2D-Kommunikationsschnittstelle (101) eines V2X-Protokollstacks (102) zu implementieren,
- um ein oder mehrere Testszenarien (3) auszuführen, die das eine oder die mehreren zu testenden Fahrzeuge (106) betreffen, und
- um ein Testergebnis des einen oder der mehreren Testszenarien (3) festzuhalten;
- eine zentrale Steuereinrichtung (11) in Kommunikation mit der Vielzahl von Feldstationen (10) über ein Local Area Network, LAN;
**gekennzeichnet durch** die jeweilige Feldstation (10), umfassend einen Vektorsignalgenerator (105), der ein GNSS-Signal erzeugt, der betriebsfähig ist, um eine Umgebung eines GNSS-Empfängers des einen oder der mehreren zu testenden Fahrzeuge (106) zu simulieren.

2. Testsystem (1) nach Anspruch 1,
- das Testergebnis, umfassend eines oder mehrere von: einem Zeitstempel, einer Übertragungssignalkonfiguration, Umgebungsbedingungen und Kamerafeeddaten.

3. Testsystem (1) nach Anspruch 1 oder 2,
- die jeweilige Feldstation (10) umfassend
- eine Funkverbindungstestvorrichtung (103), die betriebsfähig ist,
- um Schichten für physischen, PHY, und Medienzugang, MAC, des V2X-Protokollstacks (102) zu emulieren; und
- um V2X-Nachrichten mit dem einen oder den mehreren zu testenden Fahrzeugen (106) auszutauschen; und
- eine Antenne (104), die mit der Funkverbindungstestvorrichtung (103) verbunden ist.

4. Testsystem (1) nach einem der vorstehenden Ansprüche,
- die jeweilige Feldstation (10) umfassend einen GNSS-Empfänger (108) für eine Zeitsynchronisation unter der Vielzahl von Feldstationen (10).

5. Testsystem (1) nach einem der vorstehenden Ansprüche,
- das eine oder die mehreren Testszenarien (3) umfassend eine Interaktion des einen oder der mehreren zu testenden Fahrzeuge (106) und eines oder mehrerer weiterer D2D-Kommunikatonspeers (107).

6. Testsystem (1) nach einem der vorstehenden Ansprüche,
- wobei die zentrale Steuereinrichtung (11) betriebsfähig ist,
- um ein Testprofil für das eine oder die mehreren zu testenden Fahrzeuge (106) zu pflegen,
- jedes der Testprofile umfassend eine Vielzahl von Testszenarien (3),
- wobei jedes der Vielzahl von Testszenarien (3) mit einer bestimmten einen der Vielzahl von Feldstationen (10) verknüpft ist; und
- gleichzeitig mit dem einen oder den mehreren zu testenden Fahrzeugen (106), die um das Testgelände (2) fahren, um die bestimmte eine der Vielzahl von Feldstationen (10) für das verknüpfte Testszenario (3) des Testprofils des einen oder der mehreren zu testenden Fahrzeuge (106) zu konfigurieren.

7. Testsystem (1) nach Anspruch 6,
- wobei das Konfigurieren durch eine bestimmte Sequenz der Testszenarien (3) des Testprofils für das jeweilige zu testende Fahrzeug (106) gemäß einer bestimmten zuvor definierten Route des jeweiligen zu testenden Fahrzeugs (106) auf dem Testgelände (2) gesteuert wird.

8. Testsystem (1) nach Anspruch 6,
- wobei das Konfigurieren durch eine Annäherung des jeweiligen zu testenden Fahrzeugs (106) an die bestimmte eine der Vielzahl von Feldstationen (10) gemäß einer beliebigen Route des jeweiligen zu testenden Fahrzeugs (106) auf dem Testgelände (2) ausgelöst wird.

9. Testsystem (1) nach einem der vorstehenden Ansprüche,
- das jeweilige Testszenario (3) umfassend eines von: einer Notbremsung, einem schnellen Spurwechsel, kreuzendem Verkehr und grüner Welle/Grünlicht.

10. Testsystem (1) nach einem der vorstehenden Ansprüche,
- wobei die jeweiligen Testprofile durch eine V2X-Simulationsplattform (110) bereitgestellt werden.

11. Testsystem (1) nach einem der vorstehenden Ansprüche,
- die D2D-Kommunikationsschnittstelle (101) umfassend eine von: einer PC5-Schnittstelle und einer Schnittstelle für dedizierte Nahbereichskommunikation, DSRC-Schnittstelle.

12. Testsystem (1) nach einem der vorstehenden Ansprüche,
- das Testgelände (2) umfassend eine Vielzahl von Grundstücken, die voneinander beabstandet sind.

13. Verfahren (4) für den Vehicle-to-Everything-Feldtest, V2X-Feldtest, eines oder mehrerer zu testender Fahrzeuge (106), wobei das Verfahren durch ein Testsystem (1) durchgeführt wird, umfassend eine Vielzahl (41) von Feldstationen (10), die an unterschiedlichen Positionen (A-F) eines Testgeländes (2) angeordnet sind, und eine zentrale Steuereinrichtung (11) in Kommunikation mit der Vielzahl von Feldstationen (10) über ein Local Area Network, LAN, wobei die jeweilige Feldstation (10) eine Vorrichtung-zu-Vorrichtung-Kommunikationsschnittstelle, D2D-Kommunikationsschnittstelle (101) eines V2X-Protokollstacks (102) implementiert; und
das Verfahren (4) umfassend
- Ausführen (45) eines oder mehrerer Testszenarien (3), die das eine oder die mehreren zu testenden Fahrzeuge (106) betreffen, an der jeweiligen Feldstation (10), und
- Festhalten (46) eines Testergebnisses des einen oder der mehreren Testszenarien (3) an der jeweiligen Feldstation (10);
**gekennzeichnet durch**
- Simulieren einer Umgebung eines GNSS-Empfängers des einen oder der mehreren zu testenden Fahrzeuge (106) durch Verwenden eines Vektorsignalgenerators (105) an der jeweiligen Feldstation (10), wobei der Vektorsignalgenerator (105) ein GNSS-Signal erzeugt.

14. Verfahren (4) nach Anspruch 13,
- das durch das Testsystem (1) nach einem der Ansprüche 2 bis 12 durchgeführt wird.

## Revendications

1. Système d'essai (1) permettant d'essayer le champ de véhicule à X, V2X, d'un ou de plusieurs véhicules à l'essai (106), comprenant
- une pluralité de stations de champ (10) agencées à différents emplacements (A-F) d'un terrain d'essai (2), la station de champ (10) respective pouvant fonctionner
- pour mettre en oeuvre une interface de communication de dispositif à dispositif, D2D (101) d'une pile de protocoles V2X (102),
- pour exécuter un ou plusieurs scénarios d'essai (3) concernant le ou les véhicules à l'essai (106), et
- pour capturer un résultat d'essai du ou des scénarios d'essai (3) ;
- un dispositif de commande central (11) en communication avec la pluralité de stations de champ (10) par l'intermédiaire d'un réseau local, LAN ;
**caractérisé par** la station de champ (10) respective comprenant un générateur de signal vectoriel (105) qui génère un signal GNSS, pour simuler un environnement d'un récepteur GNSS du ou des véhicules à l'essai (106).

2. Système d'essai (1) selon la revendication 1,
- le résultat d'essai comprenant un ou plusieurs parmi : une estampille temporelle, une configuration de signal de transmission, des conditions environnementales et des données d'alimentation de caméra.

3. Système d'essai (1) selon la revendication 1 ou la revendication 2,
- la station de champ (10) respective comprenant
- un dispositif d'essai de communication radio (103) pouvant fonctionner
- pour émuler des couches physiques, PHY et d'accès au support, MAC, de la pile de protocoles V2X (102), et
- pour échanger des messages V2X avec le ou les véhicules à l'essai (106) ; et
- une antenne (104) connectée au dispositif d'essai de communication radio (103).

4. Système d'essai (1) selon l'une quelconque des revendications précédentes,
- la station de champ (10) respective comprenant un récepteur GNSS (108) pour synchronisation temporelle parmi la pluralité de stations de champ (10).

5. Système d'essai (1) selon l'une quelconque des revendications précédentes,
- le ou les scénarios d'essai (3) comprenant une interaction du ou des véhicules à l'essai (106) et un ou plusieurs autres pairs de communication D2D (107).

6. Système d'essai (1) selon l'une quelconque des revendications précédentes,
- le dispositif de commande central (11) pouvant fonctionner
- pour maintenir un profil d'essai pour chacun du ou des véhicules à l'essai (106),
- chacun des profils d'essai comprenant une pluralité de scénarios d'essai (3),
- chacun de la pluralité de scénarios d'essai (3) étant associés à une station particulière de la pluralité de stations de champ (10) ; et
- entraînant simultanément au ou aux véhicules à l'essai (106) autour du terrain d'essai (2), pour configurer l'une particulière de la pluralité de stations de champ (10) pour le scénario d'essai associé (3) du profil d'essai du ou des véhicules à l'essai (106).

7. Système d'essai (1) selon la revendication 6,
- la configuration étant commandée par une séquence particulière des scénarios d'essai (3) du profil d'essai pour le véhicule à l'essai (106) respectif conformément à un itinéraire prédéfini particulier du véhicule à l'essai (106) respectif sur le terrain d'essai (2).

8. Système d'essai (1) selon la revendication 6,
- la configuration étant déclenchée par une approche du véhicule à l'essai (106) respectif vers l'une particulière de la pluralité de stations de champ (10) conformément à un itinéraire arbitraire du véhicule à l'essai (106) respectif sur le terrain d'essai (2).

9. Système d'essai (1) selon l'une quelconque des revendications précédentes,
- le scénario d'essai (3) respectif comprenant l'un parmi : un freinage d'urgence, un changement de voie rapide, un passage de trafic et des ondes/lumières vertes.

10. Système d'essai (1) selon l'une quelconque des revendications précédentes,
- les profils d'essai respectifs étant fournis par une plateforme de simulation V2X (110).

11. Système d'essai (1) selon l'une quelconque des revendications précédentes,
- l'interface de communication D2D (101) comprenant l'une parmi : une interface PC5 et une interface de communication à courte distance, DSRC.

12. Système d'essai (1) selon l'une quelconque des revendications précédentes,
- le terrain d'essai (2) comprenant une pluralité de domaines qui sont distants l'un de l'autre.

13. Procédé (4) d'essai de champ véhicule à X, V2X, d'un ou de plusieurs véhicules à l'essai (106), le procédé étant réalisé par un système d'essai (1) comprenant une pluralité (41) de stations de champ (10) agencées à différents emplacements (A-F) d'un terrain d'essai (2) et un dispositif de commande central (11) en communication avec la pluralité de stations de champ (10) par l'intermédiaire d'un réseau local, LAN, la station de champ (10) respective mettant en oeuvre une interface de communication de dispositif à dispositif, D2D, (101) d'une pile de protocoles V2X (102) ; et
le procédé (4) comprenant
- l'exécution (45) d'un ou de plusieurs scénarios d'essai (3) concernant le ou les véhicules à l'essai (106) au niveau de la station de champ (10) respective, et
- la capture (46) d'un résultat d'essai du ou des scénarios d'essai (3) au niveau de la station de champ (10) respective ;
**caractérisé par**
- la simulation d'un environnement d'un récepteur GNSS du ou des véhicules à l'essai (106) à l'aide d'un générateur de signal vectoriel (105) au niveau de la station de champ (10) respective, le générateur de signal vectoriel (105) générant un signal GNSS.

14. Procédé (4) selon la revendication 13,
- étant effectué par le système d'essai (1) selon l'une quelconque des revendications 2 à 12.
